# EUROPÄISCHE PATENTANMELDUNG

(11) **EP 1 359 329 A1**
(43) Veröffentlichungstag der Anmeldung: **05.11.2003**
(21) Anmeldenummer: 03005860.6
(22) Anmeldetag: 15.03.2003
(51) Int. Cl.: F16B 7/18, F16B 37/04

(54) **Verbindungselement für Montageschienen**

(30) Priorität: 30.04.2002 DE 20206858 U
(71) Anmelder: fischerwerke Artur Fischer GmbH & Co. KG, 72178 Waldachtal (DE)
(72) Erfinder: Neumar, Gunter, 72285 Pfalzgrafenweiler (DE); Kirschenmann, Gerhard, 72178 Waldachtal (DE)

(57) **Zusammenfassung**

Die Erfindung betrifft ein Verbindungselement (1) für Montageschienen (5), die einen durchgehenden Längsschlitz (6) auf einer Seite und rasterartig angeordnete Langlöcher (7) an einer anderen Seite aufweisen, wobei das Verbindungselement (1) in die Montageschiene (5) einsteckbar ist. Um ein flexibles Verbindungselement für Montageschienen (5) zu schaffen, das insbesondere die einfache Verbindung zweier Montageschienen (5) im T-Stoß (13) sowie die längenveränderliche Verbindung von Montageschienen (5) mit Zusatzelementen (12) erlaubt, schlägt die Erfindung vor, dass das Verbindungselement (1) an einer Stirnseite (2) eine axial verlaufende Gewindebohrung (3) und senkrecht hierzu mindestens eine Querbohrung (4) mit Gewinde aufweist (Figur 1).

## Beschreibung

Die Erfindung betrifft ein Verbindungselement für Montageschienen mit den Merkmalen des Oberbegriffs des Anspruchs 1.

Bei der Verbindung von Montageschienen mit rasterartig angeordneten Langlöchern z. B. im T-Stoß kommen meist Winkelstücke zum Einsatz, die mit Hammerkopfschrauben an den Montageschienen befestigt werden. Eine derartige Befestigung ist aufwändig, da relativ viele Montageschritte notwendig sind. Wird nur ein Winkelstück verwendet, so hängt die Biegesteifigkeit der Verbindung entscheidend von der Blechdicke des Winkelstücks ab. Bei der Verwendung von zwei Winkelstücken ergibt sich zwar eine deutlich steifere Verbindung, aber dafür steigt der Montageaufwand entsprechend. Außerdem ist die Anbringung von Winkelstücken häufig nicht möglich, da andere Anbauteile oder dgl. im Weg sind bzw. die Montage erschweren.

Daneben sind beispielsweise aus DE 67 50 608 Verbindungselemente bekannt, die in Montageschienen einsteckbar und über eine Schraube und Spreizelemente in der Montageschiene verankerbar sind. Dabei dient als Gegenlager der sich an einer zweiten Montageschiene oder dgl. abstützende Schraubenkopf. Eine derartige Montage ist problematisch, da die Verbindungen zwischen den Einzelelementen erst beim Anziehen Stabilität gewinnen, während bis dahin alle Elemente aufwändig zueinander positioniert und gestützt werden müssen. Für die Montage von Zusatzelementen am Kopfende einer Montageschienen sind derartige Verbindungselemente nur geeignet, wenn die Zusatzelemente so ausgebildet sind, dass sie sich am Kopfende der Montageschiene abstützen können. Gerade wenn eine längenflexible Verbindung mit Zusatzelementen gefordert ist, z.B. zur flexible Abstandsmontage oder zur flexiblen Aussteifung von T-Stößen, sind derartige Verbindungselemente grundsätzlich ungeeignet.

Der Erfindung liegt die Aufgabe zu Grunde, ein flexibles Verbindungselement für Montageschienen zu schaffen, das insbesondere die einfache Verbindung zweier Montageschienen im T-Stoß sowie die längenveränderliche Verbindung von Montageschienen mit Zusatzelementen erlaubt.

Diese Aufgabe wird erfindungsgemäß durch die Merkmale des Anspruchs 1 gelöst. Das erfindungsgemäße Verbindungselement ist in die Montageschiene einsteckbar und weist an der aus der Montageschiene weisenden Stirnseite eine in Längsrichtung verlaufende Gewindebohrung und senkrecht hierzu mindestens eine Querbohrung mit Gewinde auf. Zur Verbindung einer Montageschiene mit einem weiteren Element wird das Verbindungselement in die Montageschiene gesteckt, und mittels einer Schraube, die durch ein Langloch der Montageschiene geführt wird, befestigt. Damit steht zur Verbindung der Montageschiene mit einem anderen Element stirnseitig am Kopfende der Montageschiene eine Gewindebohrung zur Verfügung. Diese kann genutzt werden, um beispielsweise mit einer Hammerkopfschraube eine Verbindung im T-Stoß zu einer weiteren Montageschiene zu schaffen. Eine flexible Abstandsmontage kann durch das Einschrauben einer Gewindestange mit Kontermutter zur Fixierung realisiert werden.

Zur Fixierung des Verbindungselements in einer Montageschiene mit Langlöchern weist das Verbindungselement vorzugsweise zwei parallele Querbohrungen mit Gewinde auf. Der Abstand der Querbohrungen ist so gewählt, dass er mindestens dem Rastermaß der Langlöcher entspricht. Damit kann das Verbindungselement mit Schrauben durch zwei Langlöcher befestigt werden, wodurch sich eine höhere Steifigkeit ergibt, als nur mit einer Schraube. In einer bevorzugten Ausführung ist der Außenabstand zweier paralleler Querbohrungen so gewählt, dass er dem Außenabstand zweier benachbarter Langlöcher der Montageschiene entspricht. Hierdurch kann das Verbindungselement bereits durch ein loses Einschrauben zweier Schrauben in die Querbohrungen derart gehalten werden, dass es nicht mehr zu einer Verschiebung des Verbindungselements innerhalb der Montageschiene in dessen Längsrichtung kommen kann. Eine weitere Stabilisierung bereits im teilmontierten Zustand ergibt sich, wenn das Verbindungselement derart geformt ist, dass es an mindestens drei Innenseiten der Montageschiene anliegt. Hierdurch kommt es auch für den fertig montierten Zustand zu einer steiferen Verbindung, da Querkräfte und Biegemomente nicht nur über die Schrauben, sondern auch über die Innenwände der Montageschiene übertragen werden können. In einer bevorzugten Ausführung des Verbindungselements ist dieses zylindrisch ausgeformt, wodurch eine einfache Herstellbarkeit gegeben ist.

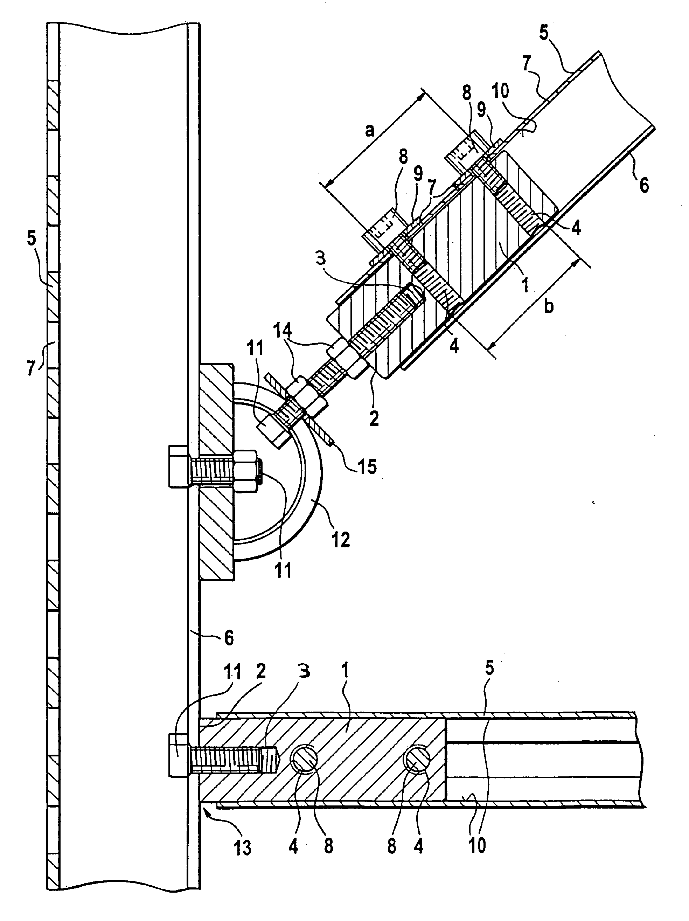

Die Erfindung wird nachfolgend anhand eines in der Zeichnung dargestellten Ausführungsbeispiels näher erläutert. Die einzige Figur zeigt eine Schnittdarstellung mit zwei Anwendungen des Verbindungselements.

Das zylindrische Verbindungselement 1 weist an seiner Stirnseite 2 eine axial verlaufende Gewindebohrung 3 sowie zwei parallele Querbohrungen 4 auf. Bei den gezeigten zwei Anwendungen des Verbindungselements werden die drei Montageschienen 5 miteinander verbunden. Die Montageschienen 5 weisen Längsschlitze 6 sowie rasterartig angeordnete Langlöcher 7 auf. Die Verbindungselemente 1 sind mittels zweier Schrauben 8 und Unterlegscheiben 9 in den Montageschienen 5 befestigt. Der Außenabstand a der Querbohrungen 4 entspricht in etwa dem Außenabstand b zweier benachbarter Langlöcher 7. Hierdurch ist das Verbindungselement 1 bereits durch loses Eindrehen der Schrauben 8 in seiner Längsrichtung fixiert. Darüber hinaus liegt es an drei Innenseiten 10 der Montageschienen 5 an und stützt sich dadurch zusätzlich ab.

An den Stirnseiten 2 der Verbindungselemente 1 sind jeweils Hammerkopfschrauben 11 eingeschraubt. Die Verbindung der Montageschienen 5 erfolgt im einen Fall über ein Zusatzelement 12 und im anderen Fall direkt im T-Stoß 13. Die Anwendung mit Zusatzelement 12 zeigt die Möglichkeit der flexiblen Abstandsmontage. Durch Muttern 14 und eine Unterlegscheibe 15 erfolgt am Verbindungselement 1 und am Zusatzelement 12 eine Konterung. Hierdurch wird beispielsweise eine flexible Aussteifung eines T-Stoßes möglich.

## Patentansprüche

1. Verbindungselement (1) für Montageschienen (5), die einen durchgehenden Längsschlitz (6) auf einer Seite und rasterartig angeordnete Langlöcher (7) an einer anderen Seite aufweisen, wobei das Verbindungselement (1) in die Montageschiene (5) einsteckbar ist, **dadurch gekennzeichnet, dass** das Verbindungselement (1) an einer Stirnseite (2) eine axial verlaufende Gewindebohrung (3) und senkrecht hierzu mindestens eine Querbohrung (4) mit Gewinde aufweist.

2. Verbindungselement nach Anspruch 1, **dadurch gekennzeichnet, dass** das Verbindungselement (1) zwei parallele Querbohrungen (4) mit Gewinde aufweist, wobei der Abstand der Querbohrungen (4) mindestens dem Rastermaß der Langlöcher (7) der Montageschiene (5) entspricht.

3. Verbindungselement nach Anspruch 1, **dadurch gekennzeichnet, dass** der Außenabstand (a) der Querbohrungen (4) dem Außenabstand (b) zweier benachbarter Langlöcher der Montageschiene entspricht.

4. Verbindungselement nach Anspruch 1, **dadurch gekennzeichnet, dass** das Verbindungselement (1) an mindestens drei Innenseiten (10) der Montageschiene (5) anliegt.

5. Verbindungselement nach Anspruch 1, **dadurch gekennzeichnet, dass** das Verbindungselement (1) zylindrisch geformt ist.
